# EUROPÄISCHE PATENTSCHRIFT

(11) **EP 2 407 704 B1**
(45) Veröffentlichungstag und Bekanntmachung des Hinweises auf die Patenterteilung: **25.03.2015**
(21) Anmeldenummer: 11173261.6
(22) Anmeldetag: 08.07.2011
(51) Int. Cl.: F16P 3/02, B23Q 11/08

(54) **Abdeckvorrichtung, insbesondere für Werkzeugmaschinen**
Covering device, in particular for machine tools
Couverture de protection, en particulier pour machines-outils

(30) Priorität: 14.07.2010 DE 102010031327
(43) Veröffentlichungstag der Anmeldung: 18.01.2012
(73) Patentinhaber: Hennig Holding GmbH, 85551 Kirchheim (DE)
(72) Erfinder: Schönerwald, Kurt, 84186 Vilsheim (DE)
(74) Vertreter: Rau, Schneck & Hübner Patentanwälte Rechtsanwälte PartGmbB

(56) Entgegenhaltungen:
- EP-A1- 1 625 912
- EP-A2- 2 085 179
- DE-A1-102009 010 169
- DE-U1-202005 014 233
- DE-U1-202008 011 357

## Beschreibung

Die Erfindung betrifft eine Abdeckvorrichtung, insbesondere für Werkzeugmaschinen, gemäß dem Oberbegriff des Anspruchs 1.

Aus der DE 20 2008 011 357 U1 ist eine Abdeckvorrichtung für Werkzeugmaschinen bekannt, bei der eine Gliederschürze aus mehreren gelenkig miteinander verbundenen Gliedern mittels Gleitelementen in einer Führung verschiebbar geführt ist. Die Gleitelemente sind stirnseitig an den zugehörigen Gliedern angeordnet und weisen jeweils einen quer zu dem Glied verlaufenden Gleitabschnitt und einen im Wesentlichen parallel zu dem Glied verlaufenden Führungsabschnitt auf. Der Führungsabschnitt ist mittig an dem Gleitabschnitt angeordnet, so dass dieser zwei Gleitflächen ausbildet. Die Gliederschürze ist mittels der Gleitelemente in Nutplatten geführt, wobei der jeweilige Gleitabschnitt mit den Gleitflächen an der zugehörigen Nutplatte anliegt und der jeweilige Führungsabschnitt in einer Führungsnut der zugehörigen Nutplatte geführt ist.

Aus der DE 20 2005 014 233 U1 ist eine Abdeckvorrichtung für Werkzeugmaschinen bekannt, die eine Gliederschürze mit gelenkig miteinander verbundenen Schutzlamellen aufweist. An den Schutzlamellen sind Tragstücke mit einem Gleitfortsatz derart befestigt, dass zwischen dem Gleitfortsatz und der Schutzlamelle ein Führungsspalt begrenzt wird. Die Führung der Gliederschürze erfolgt mittels einer Führungsschiene, die in dem Führungsspalt angeordnet ist. Die Schutzlamellen haben in axialer Richtung einen Überstand, um die Gleitfortsätze der Tragstücke sowie die Fühningsschiene vollständig abzudecken und zu schützen.

Die DE 10 2009 010 169 A1 offenbart eine Abdeckvorrichtung mit mehreren gelenkig miteinander verbundenen Gliedern. Die Glieder sind an einer oberen Führung aufgehängt und weisen an der Unterseite einen Führungsvorsprung auf, der zwischen zwei Seitenwangen einer unteren Führung geführt ist.

Der Erfindung liegt die Aufgabe zugrunde, eine Abdeckvorrichtung zu schaffen, die einfach und robust aufgebaut ist und deren Gleit- und Führungseigenschaften auf einfache und zuverlässige Weise verbessert werden.

Diese Aufgabe wird durch eine Abdeckvorrichtung mit den Merkmalen des Anspruchs 1 gelöst. Durch die Anordnung des Führungsabschnitts an dem zugehörigen Gleitabschnitt bildet der Gleitabschnitt des jeweiligen Gleitelements genau eine zusammenhängende Gleitfläche aus. Diese Gleitfläche, die nur einseitig neben dem Führungsabschnitt angeordnet ist, ist im Vergleich zu den bekannten Gleitflächen, die aufgrund der mittigen Anordnung des Führungsabschnitts beidseitig neben diesem an dem Gleitabschnitt ausgebildet sind, deutlich größer. Dies gilt insbesondere dann, wenn die Gleitabschnitte der erfindungsgemäßen Gleitelemente und die Gleitabschnitte der bekannten Gleitelemente die gleiche Größe aufweisen. Durch die vergleichsweise große Gleitfläche ist die zusammenhängende Anlage- bzw. Auflagefläche an der zugehörigen Führung ebenfalls größer, wodurch die Gliederschürze besser in der Führung gleitet und geführt wird. Die Gleit- und Führungseigenschaften werden dementsprechend gegenüber dem Stand der Technik, insbesondere gegenüber den aus der DE 20 2008 011 357 U1 bekannten Gleitelementen verbessert.

Dadurch, dass die Führung mindestens ein Führungselement mit zwei eine Führungsnut begrenzenden Führungswänden aufweist, und die Gleitelemente mit der jeweiligen Gleitfläche des Gleitabschnitts an einer der Führungswände anliegen und der zugehörige Führungsabschnitt zwischen den Führungswänden in der Führungsnut angeordnet ist, wird die Gliederschürze in der Führung sicher und zuverlässig geführt. Da die dem Arbeitsraum zugewandte innenliegende Führungswand bündig mit den Innenwänden der Glieder und den Innenseiten der zugehörigen Gleitelemente verläuft, weist die Abdeckvorrichtung zu dem Arbeitsraum der Werkzeugmaschine hin, also an der Späneseite, eine vollständig ebene Fläche auf, die einfach abstreifbar ist und keine Stufen zur Ablagerung von Verschmutzungen aufweist. Weiterhin ist die Abdeckvorrichtung im Bereich der Gleitelemente im Wesentlichen dicht ausgebildet, so dass Verschmutzungen im Bereich der Gleitelemente nicht durch die Abdeckvorrichtung hindurch treten können. Dadurch, dass die Gleitabschnitte an ihren zugehörigen Innenseiten bündig verlaufen und gegeneinander anliegen, bilden die Gleitabschnitte zum Arbeitsraum der Werkzeugmaschine hin eine dichte und ebene Fläche aus. Hierdurch wird gegenüber dem Stand der Technik, insbesondere gegenüber der DE 20 2005 014 233 U1 ein einfacherer und robusterer Aufbau erzielt, ohne dass die Lebensdauer der Abdeckvorrichtung durch Verschmutzungen beeinträchtigt wird.

Eine Abdeckvorrichtung nach Anspruch 2 weist einen einfachen und robusten Aufbau auf.

Eine Abdeckvorrichtung nach Anspruch 3 weist eine optimale Größe der Gleitfläche auf. Dadurch, dass die Breite des Gleitabschnitts im Wesentlichen gleich der Breite des zugehörigen Gliedes ist, wird die Gleitfläche in der Breite optimiert, ohne dass der jeweilige Gleitabschnitt in nennenswertem Ausmaß über den Querschnitt des zugehörigen Gliedes übersteht.

Eine Abdeckvorrichtung nach Anspruch 4 weist einen kompakten und robusten Aufbau auf, da der jeweilige Gleitabschnitt nicht über die Innenwand und/oder Außenwand des zugehörigen Gliedes übersteht. Verläuft der Gleitabschnitt beidseitig bündig, sind die Breiten des Gleitabschnitts und des zugehörigen Gliedes gleich. Verläuft der jeweilige Gleitabschnitt bündig mit der Innenwand des zugehörigen Gliedes, bilden die Innenwände sowie die Innenseiten der Gleitabschnitte eine ebene Fläche, die einfach abstreifbar ist und keine Stufen für Verschmutzungen, wie beispielsweise Fremdkörper oder Kühlschmiermittel, aufweist.

Eine Abdeckvorrichtung nach Anspruch 5 vereinfacht das Biegen der Gliederschürze, um diese entlang eines Kurvenverlaufs zu führen oder spiralartig aufzurollen. Durch die quer zu der Verschieberichtung verringerte Länge der Gleitabschnitte können benachbarte Glieder einfach zueinander verschwenkt werden. Insbesondere verringert sich die Länge des jeweiligen Gleitabschnittes von einer Innenwand zu einer Außenwand des zugehörigen Gliedes.

Eine Abdeckvorrichtung nach Anspruch 6 weist eine in der Länge optimierte Größe der Gleitfläche auf. Insbesondere ist die maximale Länge der jeweiligen Gleitfläche gleich der Länge der Innenwand des zugehörigen Gliedes.

Eine Abdeckvorrichtung nach Anspruch 7 optimiert die Größe der Gleitfläche, da der Führungsabschnitt äußerst platzsparend angeordnet ist.

Eine Abdeckvorrichtung nach Anspruch 8 bildet eine möglichst ebene Fläche der Gliederschürze, so dass sich Verschmutzungen nicht sammeln können.

Eine Abdeckvorrichtung nach Anspruch 9 optimiert die Größe der jeweiligen Gleitfläche, da der Führungsabschnitt eine verhältnismäßig geringe Länge aufweist.

Eine Abdeckvorrichtung nach Anspruch 10 vereinfacht das Biegen der Gliederschürze, um diese entlang eines Kurvenverlaufs zu führen oder spiralförmig aufzurollen.

Eine Abdeckvorrichtung nach Anspruch 11 ermöglicht eine einfache Befestigung der Gleitelemente an den zugehörigen Gliedern. Insbesondere kann das jeweilige Gleitelement in einen Hohlraum des zugehörigen Gliedes eingeschoben werden, so dass das Gleitelement kraft- und/oder formschlüssig befestigt ist. Alternativ kann der jeweilige Befestigungsabschnitt in der Ausnehmung angeordnet und mit der Innenwand des jeweiligen Gliedes verschraubt oder vernietet werden.

Eine Abdeckvorrichtung nach Anspruch 12 ermöglicht, dass die Gliederschürze beidseitig sicher und zuverlässig geführt wird.

Weitere Merkmale, Vorteile und Einzelheiten der Erfindung ergeben sich aus der nachfolgenden Beschreibung eines Ausführungsbeispiels. Es zeigen:

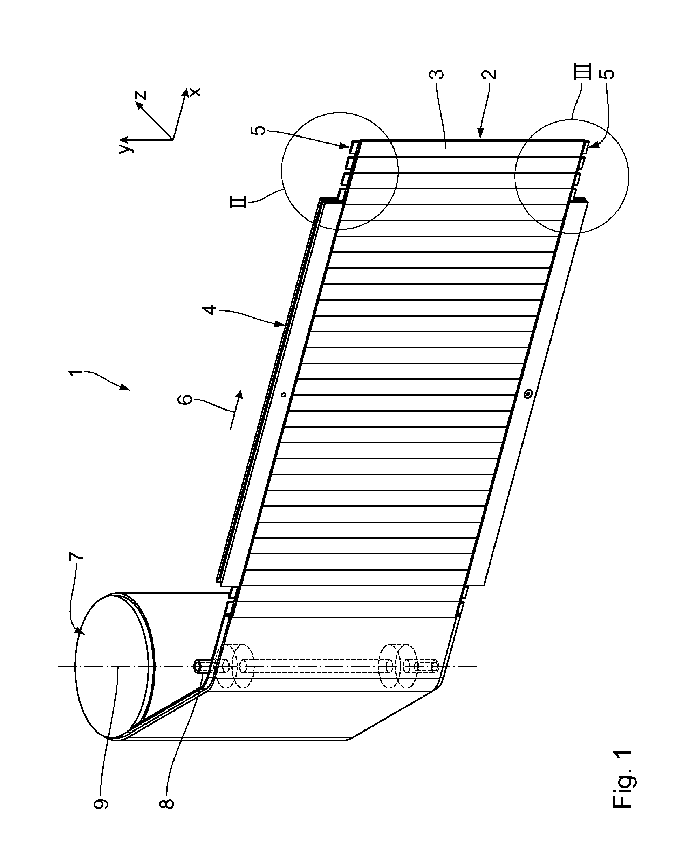

- Fig. 1: eine perspektivische Ansicht einer Abdeckvorrichtung für eine Werkzeugmaschine mit einer in einer Führung geführten Gliederschürze,

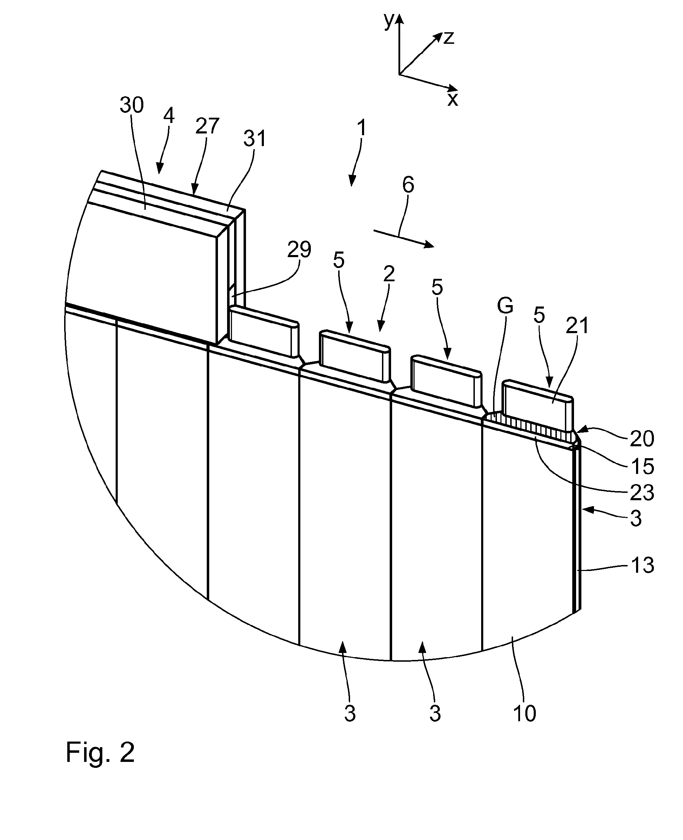

- Fig. 2: eine vergrößerte Ansicht der Gliederschürze im Bereich eines oberen Führungselements mit mehreren gelenkig miteinander verbundenen Gliedern und daran angeordneten Gleitelementen,

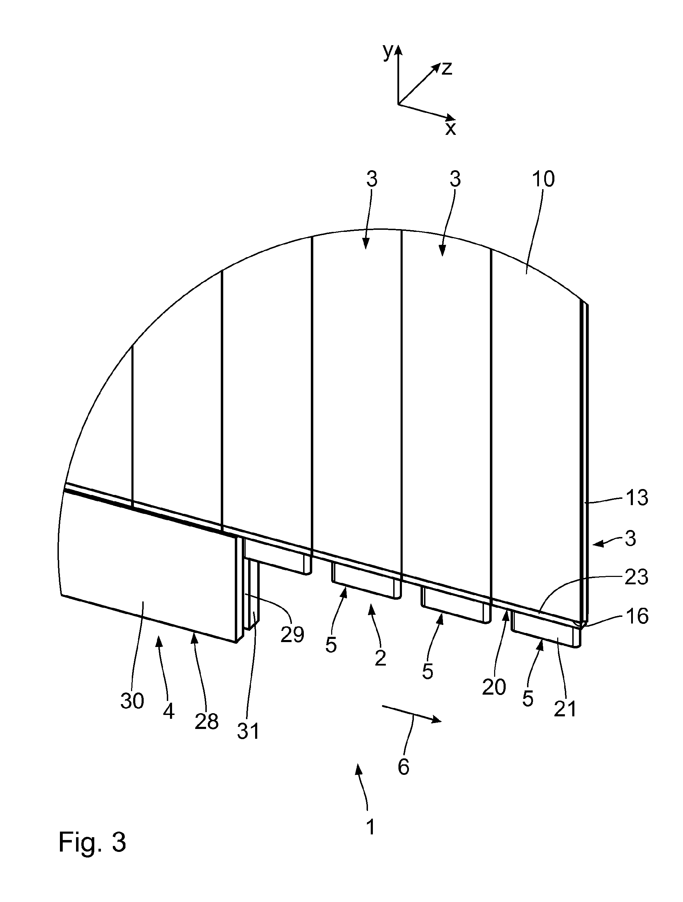

- Fig. 3: eine vergrößerte Ansicht der Gliederschürze entsprechend Fig. 2 im Bereich eines unteren Führungselements,
- Fig. 4: eine perspektivische Ansicht eines Gliedes mit einem zugehörigen Gleitelement in einem unverbundenen Zustand,

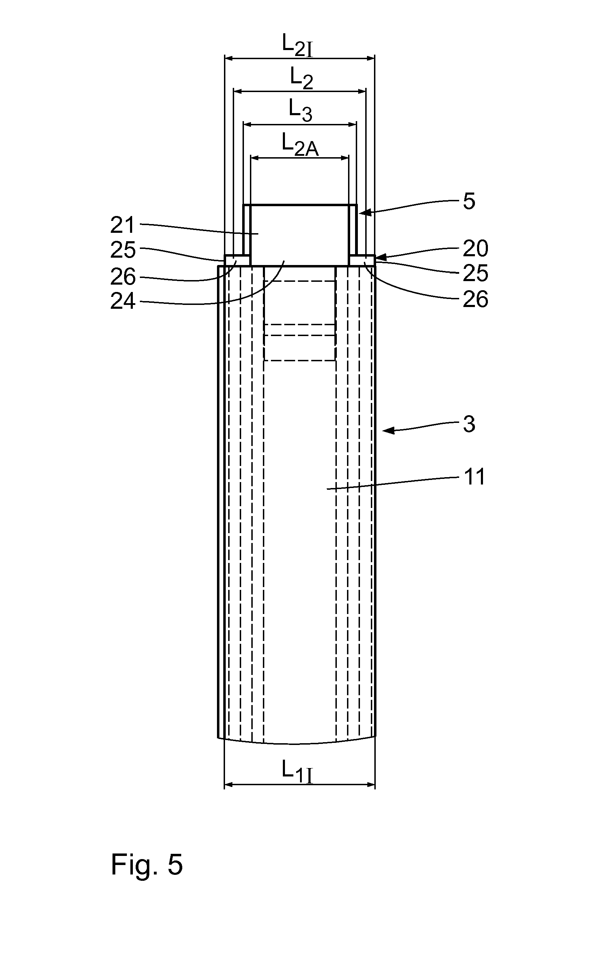

- Fig. 5: eine Vorderansicht des Gliedes und des zugehörigen Gleitelements in Fig. 4 in einem verbundenen Zustand, und

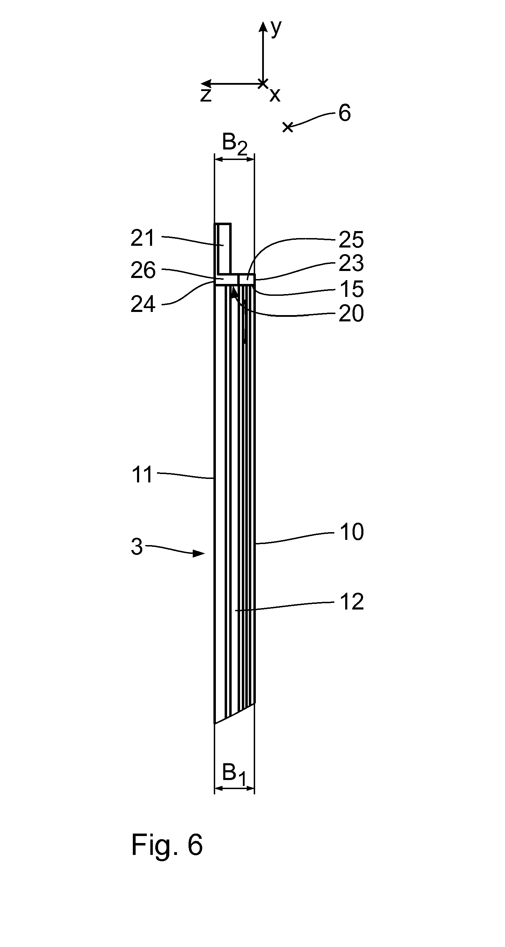

- Fig. 6: eine Seitenansicht des Gliedes und des zugehörigen Gleitelements in Fig. 4 in einem verbundenen Zustand.

Eine Abdeckvorrichtung 1 für eine Werkzeugmaschine weist eine Gliederschürze 2 auf, die aus mehreren gelenkig miteinander verbundenen Gliedern 3 ausgebildet ist. Die Gliederschürze 2 ist in einer zugehörigen Führung 4 mittels Gleitelementen 5 in einer Verschieberichtung 6 verschiebbar geführt. Die Verschieberichtung 6 verläuft im Bereich der linearen Führung 4 parallel zu einer x-Richtung. Zum Aufrollen der Gliederschürze 2 weist die Abdeckvorrichtung 1 eine Aufrolleinheit 7 sowie eine drehbare Umlenkwalze 8 auf. Die Aufrolleinheit 7 ist um eine Drehachse 9 drehantreibbar. Die Drehachse 9 verläuft parallel zu einer y-Richtung, die senkrecht zu der x-Richtung ist.

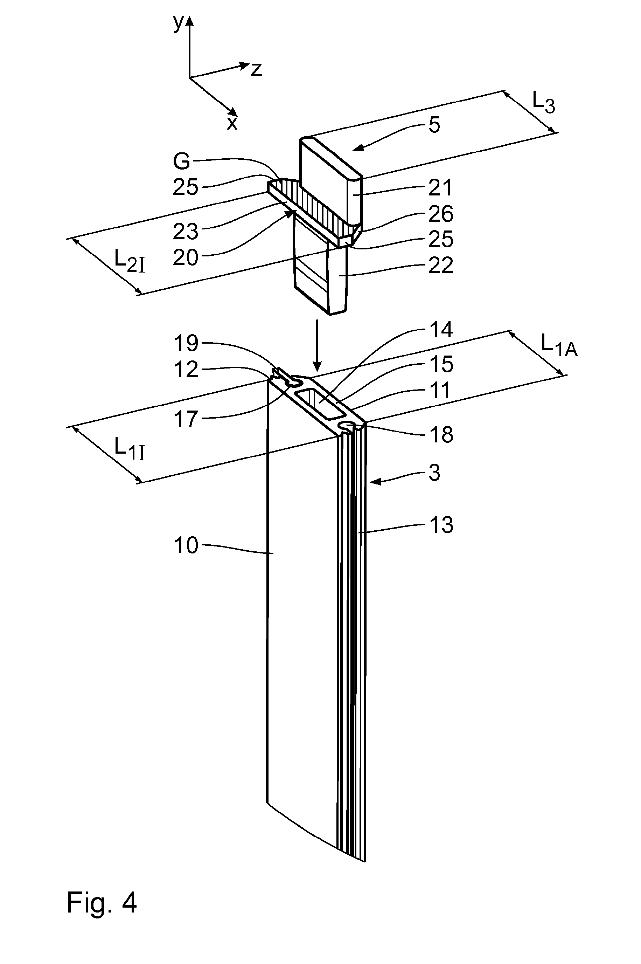

Die Glieder 3 weisen jeweils eine ebene Innenwand 10 sowie eine ebene Außenwand 11 auf, die zusammen mit Seitenwänden 12, 13 eine Ausnehmung 14 in Form eines Hohlraums begrenzen. Die Innenwand 10 ist einem Arbeitsraum der Werkzeugmaschine zugewandt. Der Hohlraum 14 erstreckt sich von einer ersten Stirnwand 15 bis zu einer gegenüberliegenden zweiten Stirnwand 16 des jeweiligen Gliedes 3 und ist an diesen Stirnwänden 15, 16 offen. Zum gelenkigen Verbinden der Glieder 3 weisen diese jeweils an den Seitenwänden 12, 13 in y-Richtung verlaufende Nuten 17, 18 auf, in denen flexible Verbindungselemente 19 angeordnet sind. Die flexiblen Verbindungselemente 19 sind in Figur 4 lediglich angedeutet.

Die Glieder 3 weisen jeweils von der Innenwand 10 zu der Außenwand 11 in einer z-Richtung eine Breite B₁ auf. Die z-Richtung verläuft senkrecht zu der x- und der y-Richtung, so dass diese ein kartesisches Koordinatensystem bilden. Darüber hinaus weisen die Innenwände 10 der jeweiligen Glieder 3 eine Länge L_{1I} in Verschieberichtung 6, also in x-Richtung, auf. Entsprechend weisen die Außenwände 11 jeweils eine Länge L_{1A} in Verschieberichtung 6 auf.

Die Gleitelemente 5 haben jeweils einen Gleitabschnitt 20, an dem ein Führungsabschnitt 21 und ein Befestigungsabschnitt 22 angeordnet ist. Der Gleitabschnitt 20 ist plattenartig ausgebildet und erstreckt sich in einem am zugehörigen Glied 3 befestigten Zustand im Wesentlichen in einer x-z-Ebene. Ausgehend von einer dem jeweiligen Glied 3 zugewandten Unterseite des Gleitabschnitts 20 erstreckt sich der Befestigungsabschnitt 22 senkrecht zu dem Gleitabschnitt 20. Der Befestigungsabschnitt 22 ist derart ausgebildet, dass dieser in den Hohlraum 14 des zugehörigen Gliedes 3 einführbar und dort kraftschlüssig befestigbar ist, so dass die Unterseite des Gleitabschnitts 20 gegen die zugehörige Stirnwand 15 bzw. 16 anliegt. Alternativ kann der Hohlraum 14 endseitig durch eine beidseitig verkürzte Außenwand 11 aufgebrochen sein, so dass die Gleitelemente 5 mit ihren jeweiligen Befestigungsabschnitten 22 an die Innenwand 10 angeschraubt oder angenietet werden können.

Der Führungsabschnitt 21 ist an einer dem Befestigungsabschnitt 22 abgewandten Oberseite des Gleitabschnitts 20 derart angeordnet, dass dieser an der Oberseite genau eine zusammenhängende Gleitfläche G ausbildet. Die jeweilige Gleitfläche G verläuft parallel zu der zugehörigen Stirnwand 15, 16. Der Führungsabschnitt 21 und der Befestigungsabschnitt 22 verlaufen senkrecht zu dem Gleitabschnitt 20 und erstrecken sich in einem befestigten Zustand des jeweiligen Gleitelements 5 in einer x-y-Ebene.

Der Befestigungsabschnitt 22 ist derart mittig an dem zugehörigen Gleitabschnitt 20 angeordnet, dass eine Innenseite 23 des Gleitabschnitts 20 bündig mit der Innenwand 10 und eine Außenseite 24 des Gleitabschnitts 20 bündig mit der Außenwand 11 verläuft. Der Gleitabschnitt 20 weist von der Innenseite 23 zu der Außenseite 24 senkrecht zu der Verschieberichtung 6 dementsprechend eine Breite B₂ auf, die gleich der Breite B₁ ist. Allgemein gilt 0,85 ≤ B₂/B₁ ≤ 1,15, insbesondere 0,9 ≤ B₂/B₁ ≤ 1,1, und insbesondere 0,95 ≤ B₂/B₁ ≤ 1,05. Vorzugsweise gilt: B₁ = B₂.

Der jeweilige Gleitabschnitt 20 weist in der Verschieberichtung 6 eine Länge L₂ auf, die sich quer zu der Verschieberichtung 6, also in z-Richtung, ändert. An der Innenseite 23 weist der Gleitabschnitt 20 eine maximale Länge L_{2I} auf, die im Bereich von ersten Stirnseiten 25 konstant bleibt. Im Bereich von zweiten Stirnseiten 26 nimmt die Länge L₂ ausgehend von der maximalen Länge L_{2I} bis zu einer minimalen Länge L_{2A} keilförmig ab, wobei die minimale Länge L_{2A} an der Außenseite 24 erreicht ist.

Die maximale Länge L_{2I} des Gleitabschnitts 20 und damit der zugehörigen Gleitfläche G ist gleich der Länge L_{1I}, so dass die Gleitabschnitte 20 in einer linearen Anordnung der Glieder 3 mit den ersten Stirnseiten 25 gegeneinander anliegen. Allgemein gilt: L_{2I}/L_{1I} ≥ 0,7, insbesondere L_{2I}/L_{1I} ≥ 0,8, und insbesondere L_{2I}/L_{1I} ≥ 0,9, wobei L_{2I} / L_{1I} ≤ 1. Vorzugsweise gilt: L_{2I}/L_{1I} = 1.

Der jeweilige Führungsabschnitt 21 verläuft bündig mit der Außenseite 24 des zugehörigen Gleitabschnitts 20 und dementsprechend bündig mit der Außenwand 11 des zugehörigen Gliedes 3. Dementsprechend ist der Führungsabschnitt 21 im Bereich der minimalen Länge L_{2A} angeordnet und weist eine Länge L₃ in Verschieberichtung 6 auf, die gleich der minimalen Länge L_{2A} ist. Allgemein gilt: L_{2A} ≤ L₃ ≤ L_{2A}.

Die Führung 4 wird durch zwei Führungselemente 27, 28 gebildet, die jeweils zwei eine Führungsnut 29 begrenzende Führungswände 30, 31 aufweisen. Zur Führung der Gliederschürze 2 liegen die Gleitelemente 5 mit der jeweiligen Gleitfläche G an der Führungswand 30 an bzw. auf der Führungswand 30 auf. Die Führungsabschnitte 21 sind dementsprechend in der jeweiligen Führungsnut 29 zwischen den Führungswänden 30 und 31 angeordnet.

Durch die Anordnung der Führungsabschnitte 21 an den zugehörigen Gleitabschnitten 20 wird je Gleitelement 5 genau eine zusammenhängende Gleitfläche G ausgebildet. Diese Gleitfläche G ist im Vergleich zu Gleitelementen mit mehreren Gleitflächen verhältnismäßig groß. Die Gliederschürze 2 weist aufgrund der verhältnismäßig großen Gleitflächen G gute Gleit- und Führungseigenschaften auf. Dadurch, dass die Innenwände 10 der Glieder 3 mit den Innenseiten 23 der jeweils zugehörigen Gleitelemente 5 bündig verlaufen, und zudem die Führungswand 30 in z-Richtung bündig mit den Innenseiten 23 und den Innenwänden 10 verläuft, wird zu dem Arbeitsraum der Werkzeugmaschine hin, also an der sogenannten Späneseite, eine ebene Fläche gebildet, die einfach abstreifbar ist und keine Stufen für Schmutzablagerungen, wie beispielsweise Fremdkörper oder Kühlschmiermittel, aufweist. Durch die keilförmige Ausbildung der Gleitabschnitte 20 können die Glieder 3 einfach aufgerollt werden, ohne dass ein Stauchen der Gleitabschnitte 20 an den Außenseiten 24 erforderlich wäre. Dadurch, dass die Gleitelemente 5 einteilig ausgebildet sind, ist deren Herstellung und Montage einfach. Die lediglich eingesteckten Gleitelemente 5 können nach ihrem Verschleiß einfach ausgetauscht werden.

## Patentansprüche

1. Abdeckvorrichtung, insbesondere für Werkzeugmaschinen, mit
- einer Gliederschürze (2), die mehrere gelenkig miteinander verbundene Glieder (3) aufweist,
- mehreren Gleitelementen (5), die jeweils
-- an einer Stirnwand (15, 16) der Glieder (3) angeordnet sind und
-- einen Gleitabschnitt (20) und einen quer zu diesem verlaufenden Führungsabschnitt (21) aufweisen, wobei der jeweilige Führungsabschnitt (21) derart an dem zugehörigen Gleitabschnitt (20) angeordnet ist, dass der Gleitabschnitt (20) genau eine Gleitfläche (G) ausbildet, und
- einer Führung (4), in der die Gliederschürze (2) mittels der Gleitelemente (5) in einer Verschieberichtung (6) verschiebbar geführt ist,
wobei
die Führung (4) mindestens ein Führungselement (27, 28) mit zwei eine Führungsnut (29) begrenzenden Führungswänden (30, 31) aufweist,
und wobei
die Gleitelemente (5) mit der jeweiligen Gleitfläche (G) des Gleitabschnitts (20) an einer der Führungswände (30, 31) anliegen und der zugehörige Führungsabschnitt (21) zwischen den Führungswänden (30, 31) in der Führungsnut (29) angeordnet ist,
**dadurch gekennzeichnet,**
**dass** eine einem Arbeitsraum zuzuwendende innenliegende Führungswand (30) bündig mit den Innenwänden (10) der Glieder (3) und den Innenseiten (23) der zugehörigen Gleitelemente (5) verläuft, und
**dass** die Gleitabschnitte (20) in einer linearen Anordnung der Glieder (3) seitlich gegeneinander anliegen.

2. Abdeckvorrichtung nach Anspruch 1, **dadurch gekennzeichnet, dass** der jeweilige Gleitabschnitt (20) an der zugehörigen Stirnwand (15, 16) anliegt und die Gleitfläche (G) parallel zu der Stirnwand (15, 16) verläuft.

3. Abdeckvorrichtung nach Anspruch 1 oder 2, **dadurch gekennzeichnet, dass** für das Verhältnis einer Breite B₂ des jeweiligen Gleitabschnitts (20) senkrecht zu der Verschieberichtung (6) zu einer Breite B₁ des zugehörigen Gliedes (3) gilt: 0,85 ≤ B₂/B₁ ≤ 1,15, insbesondere 0,9 ≤ B₂/B₁ ≤ 1,1, und insbesondere 0,95 ≤ B₂/B₁ ≤ 1,05.

4. Abdeckvorrichtung nach einem der Ansprüche 1 bis 3, **dadurch gekennzeichnet, dass** der jeweilige Gleitabschnitt (20) bündig mit einer Innenwand (10) und/oder einer Außenwand (11) des zugehörigen Gliedes (3) verläuft.

5. Abdeckvorrichtung nach einem der Ansprüche 1 bis 4, **dadurch gekennzeichnet, dass** der jeweilige Gleitabschnitt (20) eine Länge (L₂) in der Verschieberichtung (6) aufweist, die sich quer zu der Verschieberichtung (6) verringert, insbesondere keilförmig verringert.

6. Abdeckvorrichtung nach einem der Ansprüche 1 bis 5, **dadurch gekennzeichnet, dass** für das Verhältnis einer maximalen Länge L₂₁ der jeweiligen Gleitfläche (G) in der Verschieberichtung (6) zu einer Länge L_{1I} einer Innenwand (10) des zugehörigen Gliedes (3) gilt: L_{2I}/L_{1I} ≥ 0,7, insbesondere L_{2I}/L_{1I} ≥ 0,8, und insbesondere L_{2I}/L_{1I} ≥ 0,9.

7. Abdeckvorrichtung nach einem der Ansprüche 1 bis 6, **dadurch gekennzeichnet, dass** der jeweilige Führungsabschnitt (21) bündig mit dem zugehörigen Gleitabschnitt (20) verläuft.

8. Abdeckvorrichtung nach einem der Ansprüche 1 bis 7, **dadurch gekennzeichnet, dass** der jeweilige Führungsabschnitt (21) bündig mit einer Außenwand (11) des zugehörigen Gliedes (3) verläuft.

9. Abdeckvorrichtung nach einem der Ansprüche 1 bis 8, **dadurch gekennzeichnet, dass** der jeweilige Führungsabschnitt (21) eine Länge (L₃) in der Verschieberichtung (6) aufweist, die kleiner als die maximale Länge (L_{2I}) des zugehörigen Gleitabschnitts (20) ist.

10. Abdeckvorrichtung nach einem der Ansprüche 1 bis 9, **dadurch gekennzeichnet, dass** der jeweilige Führungsabschnitt (21) im Bereich einer minimalen Länge (L_{2A}) in der Verschieberichtung (6) des zugehörigen Gleitabschnitts (20) angeordnet ist.

11. Abdeckvorrichtung nach einem der Ansprüche 1 bis 10, **dadurch gekennzeichnet, dass** die Gleitelemente (5) jeweils einen Befestigungsabschnitt (22) aufweisen, der
- an einer dem Führungsabschnitt (21) abgewandten Seite des zugehörigen Gleitabschnitts (20) angeordnet ist und
- in einer Ausnehmung (14), insbesondere in einem Hohlraum, des zugehörigen Gliedes (3) befestigbar ist.

12. Abdeckvorrichtung nach einem der Ansprüche 1 bis 11, **dadurch gekennzeichnet, dass** die Führung (4) zwei Führungselemente (27, 28) aufweist, in denen die Glieder (3) mittels der zugehörigen Gleitelemente (5) beidseitig geführt sind.

## Claims

1. Covering device, in particular for machine tools, comprising
- a link apron (2) which has a plurality of links (3) connected to each other in an articulated manner,
- a plurality of sliding members (5) each of which
-- is arranged at a front wall (15, 16) of the links (3), and
-- has a sliding portion (20) and a guide portion (21) running transversely to said sliding portion (20), wherein the respective guide portion (21) is arranged at the associated sliding portion (20) such that the sliding portion (20) forms exactly one sliding surface (G), and
- a guide (4) in which the link apron (2) is guided for displacement in a displacement direction (6) by means of the guide members (5),
wherein
the guide (4) has at least one guide member (27, 28) with two guide walls (30, 31) defining a guide groove (29),
and wherein the sliding members (5) abut against one of the guide walls (30, 31) with the respective sliding surface (G) of the sliding portion (20), and the associated guide portion (21) is arranged between the guide walls (30, 31) in the guide groove (29),
**characterised in**
**that** an inner guide wall (30) to be arranged such as to face the working space is flush with the inner walls (10) of the links (3) and the inner sides (23) of the associated sliding members (5), and
**that** the sliding portions (20) laterally abut against each other in a linear arrangement of the links (3).

2. Covering device according to claim 1, **characterised in that** the respective sliding portion (20) abuts against the associated front wall (15, 16) and the sliding surface (G) runs parallel to the front wall (15, 16).

3. Covering device according to claim 1 or 2, **characterised in that** the ratio of a width B₂ of the respective sliding portion (20) in a direction perpendicular to the displacement direction (6) to a width B₁ of the associated link (3) is such that 0.85 ≤ B₂/B₁ ≤ 1.15, in particular 0.9 ≤ B₂/B₁ ≤ 1.1, and in particular 0.95 ≤ B₂/B₁ ≤ 1.05.

4. Covering device according to one of claims 1 to 3, **characterised in that** the respective sliding portion (20) is flush with an inner wall (10) and/or an outer wall (11) of the associated link (3).

5. Covering device according to one of claims 1 to 4, **characterised in that** the respective sliding portion (20) has a length (L₂) in the displacement direction (6) which reduces in a direction transverse to the displacement direction (6), in particular in the shape of a wedge.

6. Covering device according to one of claims 1 to 5, **characterised in that** the ratio of a maximum length L_{2I} of the respective sliding surface (G) in the displacement direction (6) to a length L_{1I} of an inner wall (10) of the associated link (3) is such that L_{2I}/L_{1I} ≥ 0.7, in particular L_{2I}/L_{1I} ≥ 0.8, and in particular L_{2I}/L_{1I} ≥ 0.9.

7. Covering device according to one of claims 1 to 6, **characterised in that** the respective guide portion (21) is flush with the associated sliding portion (20).

8. Covering device according to one of claims 1 to 7, **characterised in that** the respective guide portion (21) is flush with an outer wall (11) of the associated link (3).

9. Covering device according to one of claims 1 to 8, **characterised in that** the respective guide portion (21) has a length (L₃) in the displacement direction (6) that is smaller than the maximum length (L_{2I}) of the associated sliding portion (20).

10. Covering device according to one of claims 1 to 9, **characterised in that** the respective guide portion (21) is arranged in the region of a minimum length (L_{2A}) in the displacement direction (6) of the associated sliding portion (20).

11. Covering device according to one of claims 1 to 10, **characterised in that** each of the sliding members (5) has a fixing portion (22) which
- is arranged at a side of the associated sliding portion (20) remote from the guide portion (21), and
- is fixable in a recess (14), in particular in a hollow space, of the associated link (3).

12. Covering device according to one of claims 1 to 11, **characterised in that** the guide (4) has two guide members (27, 28) in which the links (3) are guided on both sides by means of the associated sliding members (5).

## Revendications

1. Couverture de protection, en particulier, pour des machines-outils, comprenant
- un tablier à maillons (2), qui présente plusieurs maillons (3) reliés les uns aux autres de manière articulée,
- plusieurs éléments de friction (5), qui, chacun
-- est agencé sur la cloison frontale (15, 16) des maillons (3), et
-- présente une section de friction (20) et une section de guidage (21), qui lui est perpendiculaire, la section de guidage (21) en question étant disposée par rapport à la section de friction (20) correspondante de telle manière que la section de friction (20) constitue précisément une surface de friction (G), et
- un système de guidage (4), dans lequel le tablier à maillons (2) est emmené en glissant dans une direction de déplacement (6) au moyen des éléments de friction (5),
où
le système de guidage (4) présente au moins un élément de guidage (27, 28) comportant deux cloisons de guidage (30, 31) délimitant une rainure de guidage (29),
et où les éléments de friction (5) sont plaqués, avec la surface de friction (G) en question de la section de friction (20), contre l'une des cloisons de guidage (30, 31) et où la section de guidage (21) correspondante est agencée dans la rainure de guidage (29) entre les cloisons de guidage (30, 31),
**caractérisée en ce**
**qu**'une cloison de guidage (30), située à l'intérieur, tournée vers un espace de travail, s'étend en faisant corps avec les cloisons intérieures (10) des maillons (3) et les faces intérieures (23) des éléments de friction (5) correspondants, et
**que** les sections de friction (20) sont alignées les unes contre les autres latéralement dans un arrangement linéaire des maillons (3).

2. Couverture de protection selon la revendication 1, **caractérisée en ce que** la section de friction (20) en question est plaquée en faisant corps avec la cloison frontale (15, 16) correspondante et la surface de friction (G) s'étend parallèlement par rapport à la cloison frontale (15, 16).

3. Couverture de protection selon les revendications 1 ou 2, **caractérisée en ce que,** pour le rapport entre une largeur B₂ de la section de friction (20) en question perpendiculaire à la direction de déplacement (6) et une largeur B₁ du maillon (3) correspondant, on ait : 0,85 ≤ B₂/B₁ ≤ 1,15, notamment 0,9 ≤ B₂/B₁ ≤ 1,1, et en particulier, 0,95 ≤ B₂/B₁ ≤ 1, 05.

4. Couverture de protection selon l'une des revendications 1 à 3, **caractérisée en ce que** la section de friction (20) en question s'étend en faisant corps avec une cloison intérieure (10) et/ou une cloison extérieure (11) du maillon (3) correspondant.

5. Couverture de protection selon l'une des revendications 1 à 4, **caractérisée en ce que** la section de friction (20) en question présente une longueur (L₂) dans la direction de déplacement (6) qui s'amenuise perpendiculairement par rapport à la direction de déplacement (6), qui s'amenuise notamment sous forme d'un cône.

6. Couverture de protection selon l'une des revendications 1 à 5, **caractérisée en ce que,** pour le rapport entre une longueur L_{2I} maximale de la surface de friction (G) en question dans la direction de déplacement (6) et une longueur L_{1I} d'une cloison intérieure (10) du maillon (3) correspondant, on ait : L_{2I}/L_{1I} ≥ 0,7, notamment, L_{2I}/L_{1I} ≥ 0,8, et en particulier, L_{2I}/L_{1I} ≥ 0,9.

7. Couverture de protection selon l'une des revendications 1 à 6, **caractérisée en ce que** la section de guidage (21) en question s'étend en faisant corps avec la section de friction (20) correspondante.

8. Couverture de protection selon l'une des revendications 1 à 7, **caractérisée en ce que** la section de guidage (21) en question se déploie en faisant corps avec une cloison extérieure (11) du maillon (3) correspondant.

9. Couverture de protection selon l'une des revendications 1 à 8, **caractérisée en ce que** la section de guidage (21) en question présente une longueur (L₃) dans la direction de déplacement (6) qui est inférieure à la longueur (L_{2I}) maximale de la section de friction (20) correspondante.

10. Couverture de protection selon l'une des revendications 1 à 9, **caractérisée en ce que** la section de guidage (21) en question est agencée dans la zone d'une longueur (L_{2A}) minimale dans la direction de déplacement (6) de la section de friction (20) correspondante.

11. Couverture de protection selon l'une des revendications 1 à 10, **caractérisée en ce que** les éléments de friction (5) présentent, chacun, une section de fixation (22) qui
- est agencée sur une face de la section de friction (20) correspondante opposée à la section de guidage (21), et
- peut être fixée dans un évidement (14), notamment un corps creux, du maillon (3) correspondant.

12. Couverture de protection selon l'une des revendications 1 à 11, **caractérisée en ce que** le système de guidage (4) présente deux éléments de guidage (27, 28) dans lesquels les maillons (3) sont guidés sur les deux côtés au moyen des éléments de friction (5) correspondants.
